# EUROPEAN PATENT APPLICATION

(11) **EP 1 936 451 A1**
(43) Date of publication of application: **25.06.2008**
(21) Application number: 07023980.1
(22) Date of filing: 11.12.2007
(51) Int. Cl.: G05B 19/042, G06F 21/00

(54) **System and method for setting software option of numeric control device**

(30) Priority: 18.12.2006 JP 2006340153
(71) Applicant: FANUC LTD, Minamitsuru-gun, Yamanashi 401-0597 (JP)
(72) Inventor: Komiya, Hidetsugu, Minamitsuru-gun Yamanashi 401-0597 (JP); Ishikawa, Yasushi, Minamitsuru-gun Yamanashi 401-0597 (JP); Fujita, Naoki, Minamitsuru-gun Yamanashi 401-0597 (JP); Yamada, Akira, Minamitsuru-gun Yamanashi 401-0597 (JP); Imai, Hiroshi, Minamitsuru-gun Yamanashi 401-0597 (JP)
(74) Representative: Thum, Bernhard

(57) **Abstract**

A system and method for setting a software option of a numeric control device (10), by which a user cannot set the options without permission and a cost regarding option configuration may be recovered by a maker. A maker PC (12) generates option setting data for setting bit information to one or zero, based on a name or a number of a software option to be set, in order to make the function of the software option valid or invalid. This data is encoded or encrypted by using a unique identification number (10a) of a control device (10). The control device (10) reads and decodes the encoded software option setting data, in order to set data of the corresponding memory address and bit number in the control device (10) to one or zero. By using the unique identification number (10a) of the control device (10), only the control device (10), the software option setting data of which is required, can decode the encoded data.

## Description

### RELATED APPLICATIONS

The present application claims priority from Japanese Patent Application No. 2006-340153, filed on December 18, 2006, the entire content of which is fully incorporated herein by reference.

### BACKGROUND OF THE INVENTION

### 1. Field of the Invention

The present invention relates to a setting system and a setting method for setting a software option of a numeric control device.

### 2. Description of the Related Art

Software constituting a numeric control device is classified broadly into basic software for executing a basic operation and optional software used for special operations. In general, optional software is not added to the numeric control device upon request. Instead, the optional software is previously stored in a ROM or the like of the numeric control device, and which option can be used is determined by setting each option to valid or invalid, by setting an address bit of an internal memory of the control device, in which software options are installed, to one or zero.

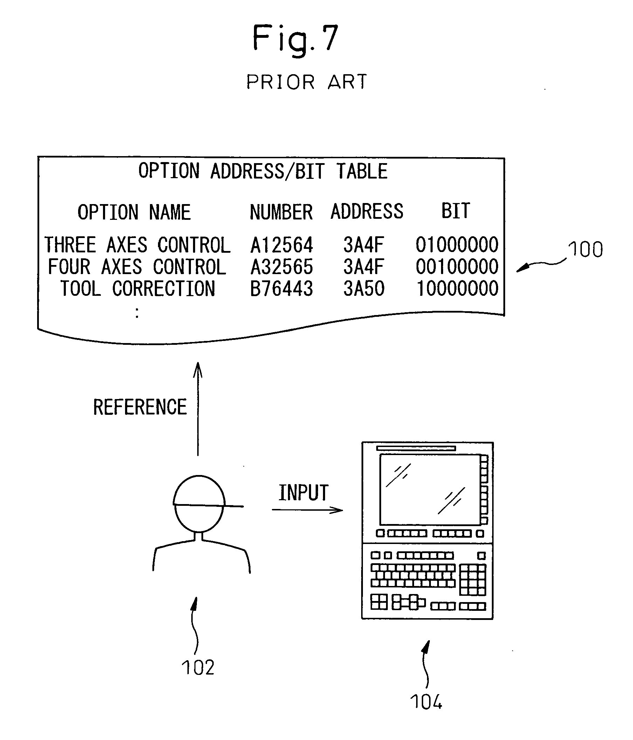

Fig. 7 shows an example of a method for setting the above options. In the prior art, an address/bit table 100, including the names of software options and corresponding numbers, addresses and bits, is provided. Then, an operator or a serviceman 102 on the makers side sets the bit information in an address of a control device 104 having a software setting function to one or zero, with reference to the address/bit table 100, at a user's request, in order to set the software option.

Japanese Unexamined Patent Publication No. 7-234714 discloses a numeric control device having a select function, in which only options selected by using an option parameter may be executed. In the control device, prior to executing the optional software, a function and/or a parameter relating to the software is displayed, whereby a user can check such information.

However, in the setting method as shown in Fig. 7, if the option address/bit table is disclosed to a general user despite the intention of the maker, or if the user illegally acquires the address/bit table, the user can set or change the software option without the permission of the maker. In such a case, it is difficult for the maker to recover cost for setting the software option, which may be executed only by the maker.
Further, when a user arbitrarily sets the option of the control device, normal performance of the control device cannot be guaranteed, whereby a serious condition may occur regarding safety management.

### SUMMARY OF THE INVENTION

An object of the present invention is to provide a system and a method for setting a software option, by which a user cannot set the option without permission and costs for setting options may be recovered by a maker.

According to one aspect of the present invention, there is provided a software option setting system comprising: a control device having a function of setting an option of optional software; and an option setting data generating device for generating option setting data for setting the option in the control device, the software option setting system being configured to set the option of the optional software by reading the option setting data, wherein the control device has a unique identification number and the option setting data generating device has an encoding part for encoding the option setting data by using the identification number, and wherein the control device has a reading part for reading the encoded option setting data and a decoding part for decoding the option setting data by using the identification number in order to set the option.

The option setting data may include data for making the function of the optional software valid or invalid.

The option setting data may include data for enabling or disabling the use of the control device temporarily or permanently.

The option setting data generating device may have a verifying part for verifying inputted user information with previously registered user list data, and a judging part for judging whether the option setting data should be generated or not.

According to another aspect of the present invention, there is provided a method for setting an option of optional software of a control device, the method comprising the steps of: encoding software option setting data by using a unique identification number of the control device; inputting the encoded software option setting data to the control device; reading the encoded software option setting data; and decoding the encoded software option setting data by using the identification number in order to set the option of the software.

The method may further comprise the steps of:
inputting user information to an option setting data generating device for generating the software option setting data; verifying the user information with user list data previously registered in the option setting data generating device; and judging whether the option setting data should be generated or not.

The method may further comprise the steps of:
compiling software option setting data provided to a user; and calculating a price of each software option provided to the user, with reference to a price list of the software option setting data.

According to still another aspect of the present invention, there is provided a control device having a function for setting an option of optional software, the control device comprising: a unique identification number; a reading part for reading option setting data encoded by using the identification number; and a decoding part for decoding the encoded option setting data by using the identification number in order to set the option.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows an example of the configuration of a software option setting system according to the invention;
Fig. 2 is a diagram explaining a method for setting a software option by using the system of Fig. 1;
Fig. 3 shows an example of an identification number of a control device;
Fig. 4 shows an example of encoded option setting data;
Fig. 5 shows an example of the schematic configuration of the control device;
Fig. 6 is a block diagram showing the schematic configuration of an option setting data generating device; and
Fig. 7 is a diagram explaining a conventional method for setting a software option.

### DETAILED DESCRIPTION

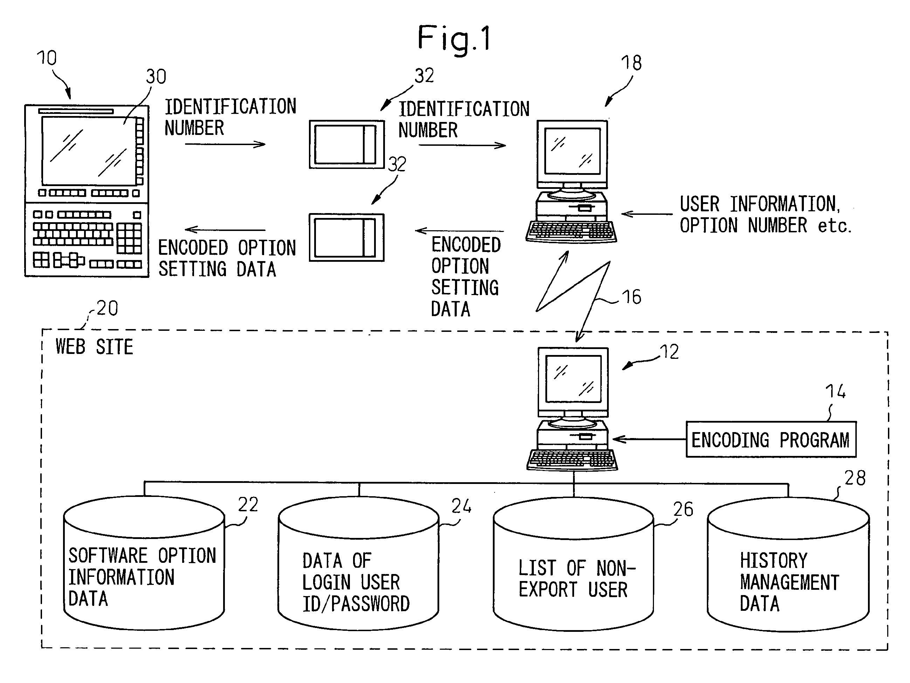

The present invention will be described below with reference to the drawings. Fig. 1 is a diagram showing an example of the configuration of software option setting system according to the invention. The system includes a control device 10 having a function for setting an option of optional software, and an option setting data generating device 12 for setting the option in the control device 10. For example, the control device 10 is a numeric control device for controlling a machine tool (not shown), and the option setting data generating device 12 is a personal computer positioned on a maker side (hereinafter, referred to as "maker PC").

The maker PC 12 is configured to be connected to an external personal computer or a user computer (hereinafter, referred to as "user PC") via Internet 16. The maker PC 12 may serve as a website 20 for generating and managing software option setting data. The website 20 includes software option information data 22 having an option name and an option number required for setting the option of the optional software, price information, and bit information of memory address in the control device 10 for enabling the optional software. The website 20 also includes data 24 relating to login user ID and password for logging onto the website 20, data 26 relating to a nonexport user list for checking whether an user at the destination has a safety problem or an export control problem, in consideration for the exportation of option setting data abroad via the Internet, and historical management data 28 for managing the history of setting of the software option, etc.

The control device 10, illustrated as the CNC device for controlling the machine tool, has a CNC identification number which is unique to the control device. The CNC identification number may be displayed on a screen 30 of the control device 10 and/or extracted by using a conventional memory card 32 or the like.

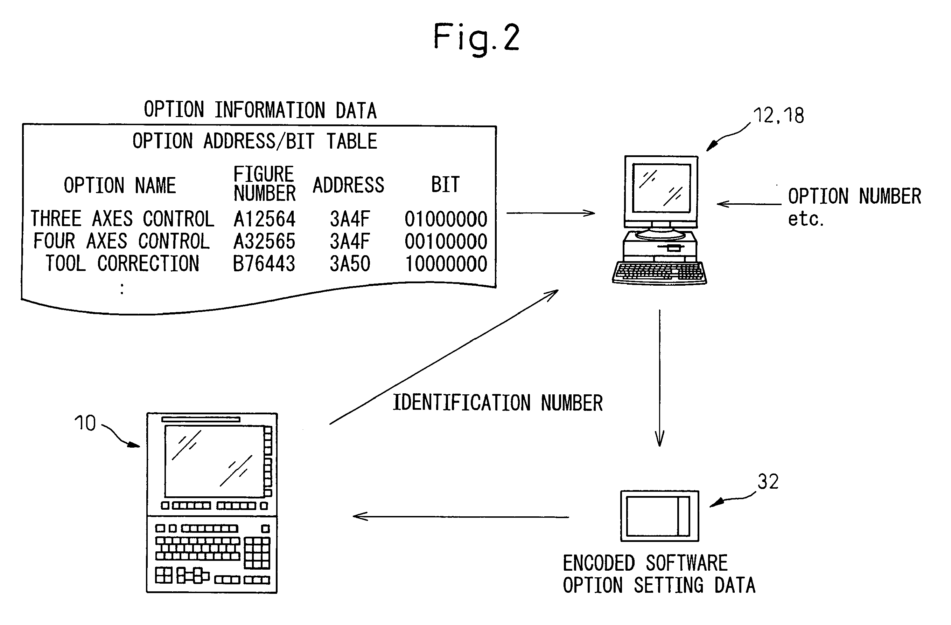

Fig. 2 is a diagram explaining a method for setting software option by using the option setting system of Fig. 1. First, the software option information data 22 is installed in the maker PC 12. A program 14 for encoding data is also installed in the maker PC 12. Then, the identification number, unique to the control device 10, is extracted from the control device. This data may be stored in the memory card 32 or directly transferred from the control device to the maker PC 12. The identification number of the control device is inputted to the maker PC 12, and simultaneously, a name and a number of a software option to be set are inputted. The maker PC 12 extracts bit information of a memory address in the control device 10 and generates setting data for setting the bit information one or zero, in order to make the function of the software option, the name and the number of which are inputted, valid or invalid. The software option setting data is encoded or encrypted by the maker PC 12 such that someone cannot modify the setting data or cannot set a software option even if the encoded data is inputted to another control device. This end may be achieved by using the unique identification number of the control device during the encoding process.

The control device 10 reads and decodes the encoded software option setting data, in order to set data of corresponding memory address and bit number in the control device 10 to one or zero. At this point, by using the unique identification number of the control device in decoding the option setting data, only the control device, the software option setting data of which is required, can decode the encoded data, whereby security may be improved.

Further, as shown in Fig. 1, the maker PC 12 for generating the software option setting data is arranged on an administrator side (or the maker side), and the user PC 18 for inputting or outputting the data is arranged on the user side. By outputting or inputting the data between the maker PC and the user PC via Internet 16, a process for generating a code and/or option information data cannot be leaked to the user, whereby confidential data may be kept. At this point, the function of the maker PC 12 may be provided to the user PC18, by adopting suitable measures regarding security and administration.

By consolidating the management of the maker PC 12, setting histories of the software option of all control device in the world may be managed, and further, it is possible to understand which software option is set at the present time. In the event that the software option setting data in the control device 10 is cleared or eliminated, it is possible to restore the eliminated data by using the history data. Also, since the user cannot set the software option without permission, export control may be safely carried out and the maker may recover cost regarding the setting options.

Next, a concrete process in the case that the user wishes to set the software option is explained. The user previously obtains a login user ID and a password from an administrator of the website. Then, when the user wishes to set the option, the user logs onto the website 20 by using the login user ID and the password.

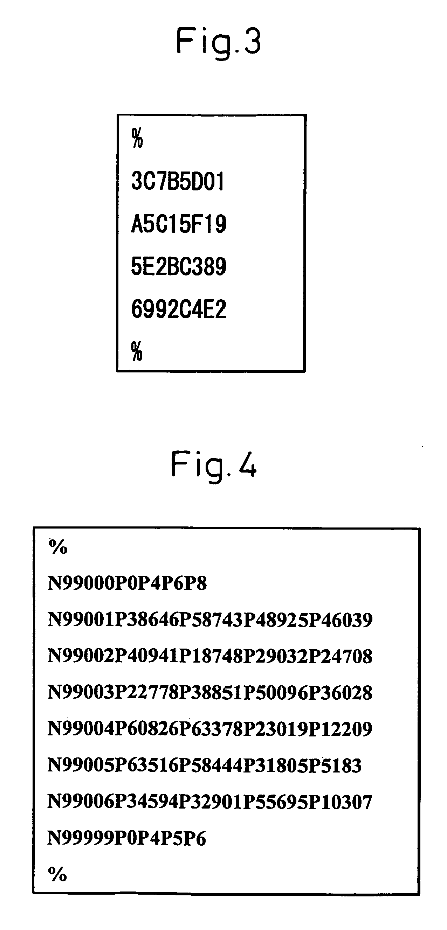

After logging onto the website 20, the user inputs necessary information such as an order number, a device name, a CNC ID number, a CNC address and a CNC equipment number, etc., from an option requiring display such as a window displayed on the user PC 18. Further, the user inputs a number of a software option, which the user wishes to set. The CNC ID number is represented, for example, by alphanumeric characters as shown in Fig. 3. The user may input the characters directly in the option requiring display, otherwise, transmit them to the website 20 by using a memory card 32 or the like. When the user uses the memory card, a file in the memory card may be readable by clicking a reference button in the option requiring display.

The maker PC 12 in the website 20 generates software option setting data, which the CNC control device 10 may read, based on the software option information data transmitted from the user. The software option setting data is generated by using the CNC ID number, unique to the control device, and encoding the option setting data. At this point, only the CNC control device having the unique CNC ID number can decode the software option setting data. Therefore, the other control devices having the other ID number cannot decode the option setting data, instead, an error occurs. The encoded software option setting data is transmitted, via Internet 16, to the user PC 18 which requires the option setting data. The user PC 18 stores the option setting data in the memory card 32 or the like, and then, the CNC control device 10 reads the data from the memory card 32 and sets the software option. Fig. 4 shows an example of encoded software option setting data.

The CNC control device 10 decodes the read software option setting data by using the CNC ID number, and set bit information of the memory address in the control device 10 to one or zero. The option setting data may include data for enabling or disabling the use of the control device temporarily or permanently, instead of or in addition to data for validating or invalidating the function of the above software. Due to this, the duration of use of the control device may be limited, and/or, all or a part of the function of the control device may be invalidated if wrong or improper use of the control device is suspected.

In the website 20, by inputting user information, an overseas user, to whom the software option setting data cannot be exported, may be checked. When the exportation is prohibited or export procedures are required, checking of the nonexport user may be suitably carried out, by verifying a user list, applications and/or an address of CNC, stored by a nonexport user master. When the nonexport user list is verified, a fuzzy search may be used in order to avoid a mistake in checking. Also, a system may be obtained, which is substantially important to security and export control, by virtue of the following: the software option cannot be set without permission; and the software option setting data is not provided to a problematic user.

The software option setting data, downloaded by a user from the website 20, may be timely aggregated by means of the maker PC 12 or another suitable means. Therefore, by calculating the price of each option with reference to a price list of the option setting data, the recovery of the cost (or the demand for payment to the user) may be surely carried out.

Further, by means of the history management data for managing the history of setting the software option, a setting status of the software option at the present time may be revealed. Therefore, if the software option setting data is eliminated, this data may be restored by using the history management data.

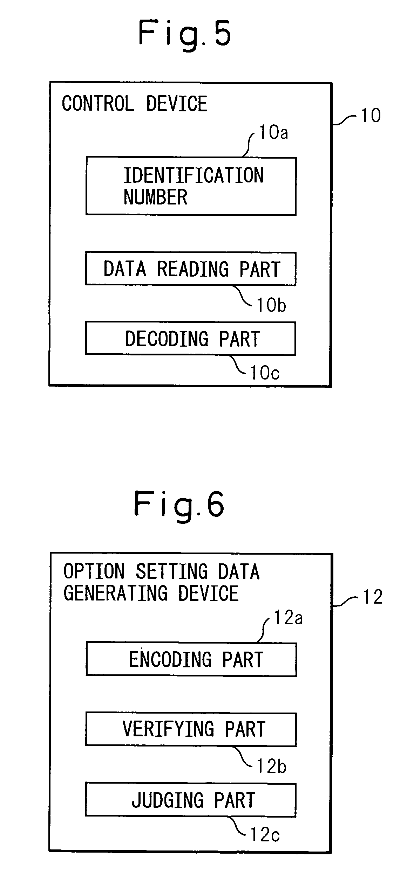

Fig. 5 shows a schematic configuration of the control device 10. The control device 10 includes an identification number 10a unique to the control device 10; a data reading part 10b for reading encoded option setting data; and a decoding part 10c for decoding the encoded option setting data by using the identification number 10a and setting the software option. In fact, the identification number 10a is stored in a non-volatile memory or the like of the control device 10, and a processing unit such as a CPU of the control device 10 serves as the data reading part 10b and the decoding part 10c.

Fig. 6 is a block diagram showing the schematic configuration of the option setting data generating device 12. The option setting data generating device 12 includes an encoding part 12a for encoding the option setting data by using the identification number 10a; a verifying part 12b for verifying inputted user information with previously registered user list data; and a judging part 12c for judging whether the option setting data should be generated or not. In fact, a processing unit such as a CPU of the option setting data generating device 12 serves as these parts 12a, 12b and 12c.

According to the setting system and method of the invention, by using a means for generating the identification number unique to the control device, the software option setting data is encoded and inputted to the control device. Therefore, the user cannot set the option without permission, whereby the cost regarding option setting may be surely recovered. Further, by using the unique identification number of the control device, only the control device having this number can decode, whereby a safely managed system may be constituted.

The option setting data may include data for making the function of the optional software valid or invalid, and/or data for enabling or disabling the use of the control device temporarily or permanently. Due to this, the duration of use of the control device may be limited, and/or, all or a part of the function of the control device may be invalidated if wrong or improper use of the control device is suspected.

Since the option setting data generating device has the verifying part for verifying inputted user information with previously registered user list data, and the judging part for judging whether the option setting data should be generated or not, it may be judged whether the option setting data may be sent to the user or not. In other words, suitable measures may be implemented against a problematic user.

By counting option setting data provided to the user and referring to a price list of the option setting data, the cost may be calculated with respect to each software option. Therefore, the demand for payment to the user may be surely and timely carried out.
While the invention has been described with reference to specific embodiments chosen for the purpose of illustration, it should be apparent that numerous modifications could be made thereto, by one skilled in the art, without departing from the basic concept and scope of the invention.

## Claims

1. A software option setting system comprising: a control device (10) having a function of setting an option of optional software; and an option setting data generating device (12) for generating option setting data for setting the option in the control device, the software option setting system being configured to set the option of the optional software by reading the option setting data using the control device (10),
**characterized in that** the control device (10) has a unique identification number (10a) and the option setting data generating device has an encoding part (12a) for encoding the option setting data by using the identification number (10a), and
the control device (10) has a reading part (10b) for reading the encoded option setting data and a decoding part (10c) for decoding the option setting data by using the identification number (10a) in order to set the option.

2. The software option setting system according to claim 1, **characterized in that** the option setting data include data for making the function of the optional software valid or invalid.

3. The software option setting system according to claim 1, **characterized in that** the option setting data include data for enabling or disabling the use of the control device (10) temporarily or permanently.

4. The software option setting system according to claim 1, **characterized in that** the option setting data generating device (12) has a verifying part (12b) for verifying inputted user information with previously registered user list data, and a judging part (12c) for judging whether the option setting data should be generated or not.

5. A method for setting an option of optional software of a control device (10), **characterized in that** the method comprises the steps of:
encoding software option setting data by using a unique identification number (10a) of the control device (10);
inputting the encoded software option setting data to the control device (10);
reading the encoded software option setting data; and
decoding the encoded software option setting data by using the identification number (10a) in order to set the option of the software.

6. The method according to claim 5, **characterized in that** the method further comprises the steps of:
inputting user information to an option setting data generating device (12) for generating the software option setting data;
verifying the user information with user list data previously registered in the option setting data generating device (12); and
judging whether the option setting data should be generated or not.

7. The method according to claim 5, **characterized in that** the method further comprises the steps of:
compiling software option setting data provided to a user; and
calculating a price of each software option provided to the user, with reference to a price list of the software option setting data.

8. A control device (10) having a function for setting an option of optional software, **characterized in that** the control device (10) comprises:
a unique identification number (10a);
a reading part (10b) for reading option setting data encoded by using the identification number (10a); and
a decoding part (10c) for decoding the encoded option setting data by using the identification number (10a) in order to set the option.

9. The control device according to claim 8, **characterized in that** the option setting data include data for making the function of the optional software valid or invalid.

10. The control device according to claim 8, **characterized in that** the option setting data include data for enabling or disabling the use of the control device (10) temporarily or permanently.
